# EUROPEAN PATENT SPECIFICATION

(11) **EP 4 173 883 B1**
(45) Date of publication and mention of the grant of the patent: **22.01.2025**
(21) Application number: 21827865.3
(22) Date of filing: 21.05.2021
(51) Int. Cl.: B60L 53/80, B60S 5/06, B60K 1/04, B66F 7/00, B66F 7/06, B66F 7/28, B66F 7/24

(54) **BATTERY SWAPPING PLATFORM, BATTERY SWAPPING STATION, AND BATTERY SWAPPING METHOD**
BATTERIEWECHSELPLATTFORM, BATTERIEWECHSELSTATION UND BATTERIEWECHSELVERFAHREN
PLATE-FORME DE PERMUTATION DE BATTERIES, STATION DE PERMUTATION DE BATTERIES ET PROCÉDÉ DE PERMUTATION DE BATTERIES

(30) Priority: 24.06.2020 CN 202010596061
(43) Date of publication of application: 03.05.2023
(73) Proprietor: Nio Technology (Anhui) Co., Ltd, Hefei City, Anhui 230601 (CN)
(72) Inventor: LI, Yongjie, Shanghai 201804 (CN); ZHANG, Ning, Shanghai 201804 (CN); CAO, Jia, Shanghai 201804 (CN); ZHENG, Lang, Shanghai 201804 (CN); YANG, Chao, Shanghai 201804 (CN); XIA, Lijian, Shanghai 201804 (CN)
(74) Representative: Vossius & Partner Patentanwälte Rechtsanwälte mbB
(86) International application number: PCT/CN2021/095155
(87) International publication number: WO 2021/258944

(56) References cited:
- WO-A1-2013/144948
- WO-A1-2019/052189
- WO-A1-2019/100656
- WO-A1-2019/114549
- CN-A- 102 795 204
- CN-A- 102 795 204
- CN-A- 103 072 558
- CN-A- 103 072 558
- CN-A- 103 359 076
- CN-A- 111 301 358
- CN-A- 111 634 207
- CN-A- 112 140 939
- CN-U- 212 921 205
- CN-U- 212 950 236

## Description

### Technical Field

Embodiments of the disclosure relate to a vehicle battery swap technology, and in particular, to a battery swap platform, a battery swap station, and a battery swap method.

### Background Art

With the development of automobile technology, new energy vehicles have become the mainstream development trend of automobile industry. A battery swap station is an automated apparatus for swapping a battery for an electric vehicle. For example, published document WO2019100656A1 discloses a battery swap platform and a battery swap station for electrical vehicles, wherein the battery swap platform is configured to park a vehicle thereon and is provided with a battery swap mechanism thereon for performing a battery swap for the vehicle. Published documents CN103072558A and CN102795204B each disclose another battery swap platform or system having a battery swap platform for parking a vehicle thereon and a battery swap mechanism arranged in the platform, respectively.

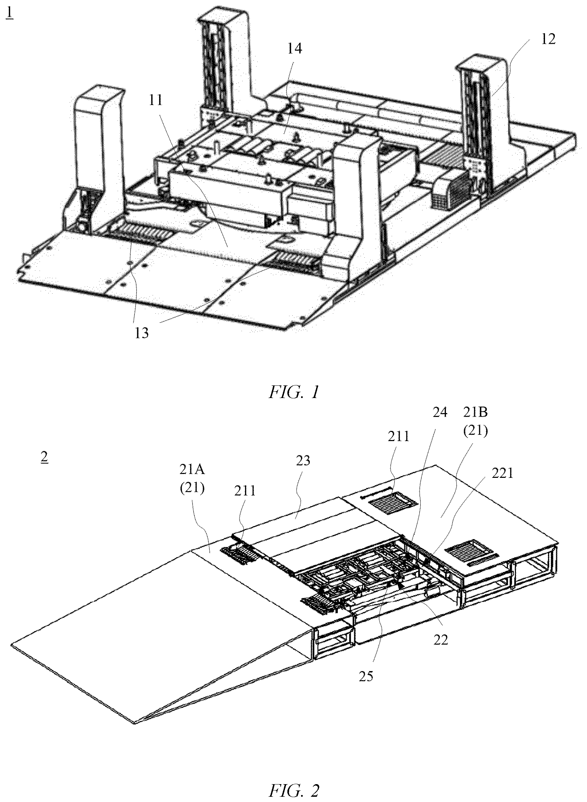

As shown in FIG. 1, an existing battery swap platform 1 is mainly composed of a parking platform 11, a vehicle hoister 12, a wheel alignment mechanism 13, and a rail guided vehicle (RGV) 14.

The parking platform 11 is configured to park a vehicle, the wheel alignment mechanism 13 is configured to position the vehicle at a designated position of the parking platform 11, the vehicle hoister 12 is configured to lift the vehicle parked on the parking platform 11 to a set height, and the rail guided vehicle 14 is configured to implement horizontal transport of a battery, vertical lifting of the battery, and a battery mounting/dismounting operation.

In the prior art, since the rail guided vehicle 14 directly travels on the parking platform 11, when the battery mounting/dismounting operation is performed for the vehicle on the parking platform 11, the vehicle hoister 12 must substantially lift the vehicle, leaving a moving space for the rail guided vehicle 14. As a result, a driver and a passenger have to leave the vehicle when the battery is being swapped for the vehicle. This not only increases the total time taken for vehicle battery swap, but also brings a poor battery swap experience to the vehicle owner, and there is also a risk of falling while the vehicle is being substantially lifted.

Furthermore, in the prior art, the battery is completely exposed in a visible range during conveying, which is easy to cause the risks of a collision to personnel and the battery being contaminated by intrusion of foreign objects, posing a potential safety hazard.

### Summary of the Disclosure

In view of the foregoing problems, the invention provides a battery swap platform, a battery swap station, and a battery swap method as defined in the appended set of claims, to overcome or at least partially solve the foregoing problems.

It can be seen from the foregoing technical solutions that, in the battery swap platform provided in the embodiments of the disclosure, the battery mounting/dismounting mechanism is transferred to the accommodating mechanism below the parking mechanism, and the battery mounting/dismounting mechanism can be lifted relative to the accommodating mechanism to extend out of the accommodating structure, and perform a battery mounting/dismounting operation for the vehicle. After the battery mounting/dismounting operation is completed, the battery mounting/dismounting mechanism can be lowered relative to the accommodating mechanism so as to be entirely received in the accommodating mechanism. Therefore, there is no need to reserve an operating space for the battery mounting/dismounting mechanism, so that when the battery mounting/dismounting operation is performed for the vehicle, the vehicle hoisting mechanism only needs to slightly lift the vehicle to a horizontal state, and a driver and a passenger do not need to leave the vehicle, which can improve the battery swap experience of the vehicle owner, reduce the total time taken for the vehicle battery swap operation, and improve the safety of the battery swap operation.

### Brief Description of the Drawings

To illustrate the technical solutions in embodiments of the disclosure or in the prior art more clearly, a brief introduction to the drawings required for the embodiments or the prior art will be provided below. Obviously, the drawings in the following description are merely some of the embodiments of the disclosure, and those of ordinary skills in the art would also obtain other drawings according to these drawings.
FIG. 1 is a schematic diagram of an overall structure of an existing battery swap platform;
FIG. 2 is a schematic diagram of an overall structure of a battery swap platform according to a first embodiment of the disclosure;
FIG. 3 is a schematic exploded view of the battery swap platform according to the first embodiment of the disclosure;
FIGS. 4A and 4D are schematic embodiment diagrams of an opening and closing mechanism for opening or closing an opening of an accommodating mechanism according to the first embodiment of the disclosure;
FIGS. 5A and 5B are schematic embodiment diagrams of a vehicle hoisting mechanism according to the the invention;
FIG. 6 is another schematic embodiment diagram of the vehicle hoisting mechanism according to the first embodiment of the disclosure;
FIGS. 7A and 7C are different schematic embodiment diagrams of a battery swap station according to a second embodiment of the disclosure;
FIGS. 8A and 8B are schematic embodiment diagrams of a battery swap method according to a third embodiment of the disclosure; and
FIG. 9 is a schematic flowchart of the battery swap method according to the invention.

### Reference signs of elements:

1: Battery swap platform; 11: Parking platform; 12: Vehicle hoister; 13: Wheel alignment mechanism; 14: Rail guided vehicle; 2: Battery swap platform; 21: Parking mechanism; 21A: First parking sub-mechanism; 21B: Second parking sub-mechanism; 211: Wheel alignment device; 22: Accommodating mechanism; 221: Opening; 23: Opening and closing mechanism; 231, 232: Compartment door; 24: Battery mounting/dismounting mechanism; 25: Vehicle hoisting mechanism; 3: Battery swap station; 31: Electrical room; 32: Control room; 4: Battery storage mechanism; 41A, 41B: Battery storage rack; 411: Battery compartment; 42: Lifting device; 5: Battery docking mechanism; 6: Vehicle

### Detailed Description of Embodiments

To enable those skilled in the art to better understand the technical solutions in the embodiments of the disclosure, the technical solutions in the embodiments of the disclosure will be clearly and completely described below in conjunction with the accompanying drawings in the embodiments of the disclosure.

The specific implementation of the embodiments of the disclosure will be further described below with reference to the accompanying drawings in the embodiments of the disclosure.

### First embodiment

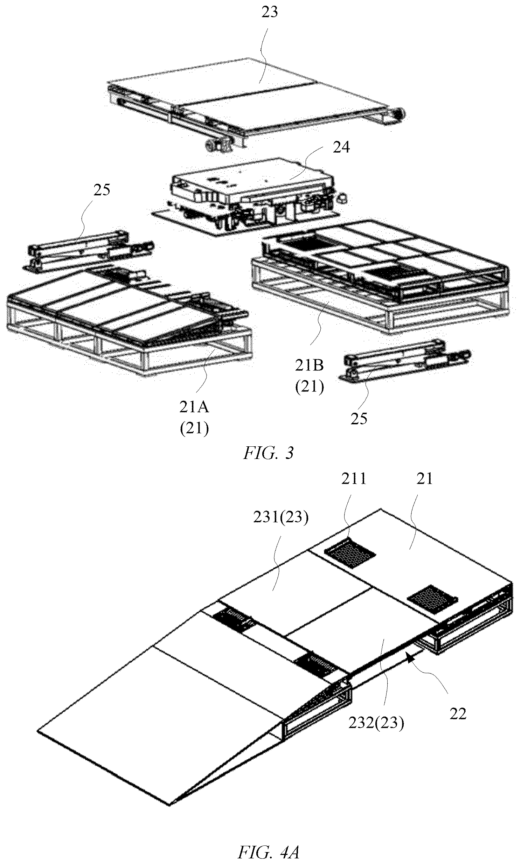

As shown in FIGS. 2 and 3, the first embodiment of the disclosure provides a battery swap platform 2, which mainly includes a parking mechanism 21, an accommodating mechanism 22, an opening and closing mechanism 23, and a battery mounting/dismounting mechanism 24.

The parking mechanism 21 is configured to park a vehicle.

Optionally, the parking mechanism 21 is further provided with a wheel alignment device 211 configured to position wheels of the vehicle, such that the vehicle is stably parked on the parking mechanism 21.

The accommodating mechanism 22 is arranged below the vehicle parked on the parking mechanism 21 and has an opening 211.

In this embodiment, the parking mechanism 21 includes a first parking sub-mechanism 21A and a second parking sub-mechanism 21B, and the accommodating mechanism 22 is naturally formed by the first parking sub-mechanism 21A and the second parking sub-mechanism 21B that are arranged separately from each other.

The opening and closing mechanism 23 is arranged on the accommodating mechanism 22 and can move relative to the accommodating mechanism 22 to open or close the opening 221 of the accommodating mechanism 22.

Optionally, the opening and closing mechanism 23 may include at least one compartment door, and the opening and closing mechanism 23 can slide relative to the accommodating mechanism 22 to open or close the opening of the accommodating mechanism 22.

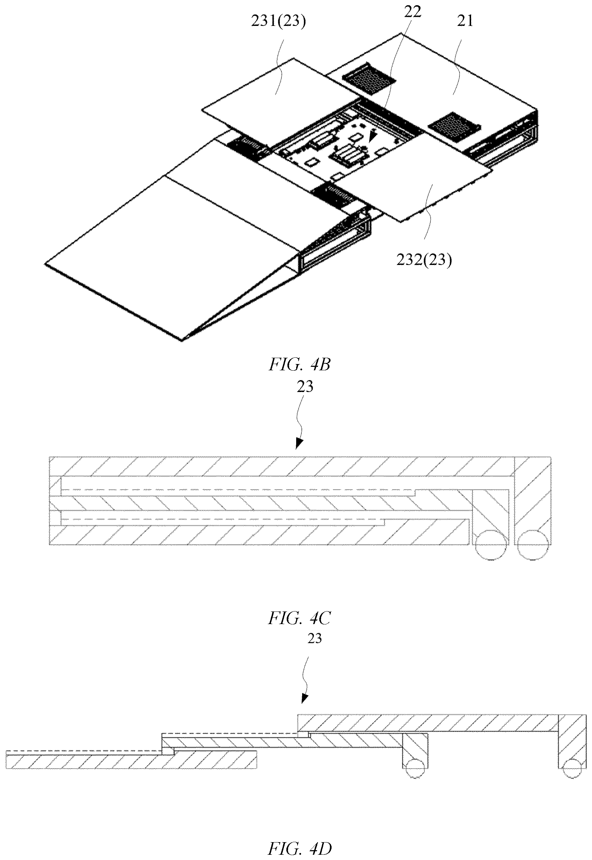

Referring to FIGS. 4A and 4B, in this embodiment, the opening and closing mechanism 23 may have a bidirectional door opening structure formed by two compartment doors 231 and 232, or may be designed as a unilateral door opening structure.

In another embodiment, the opening and closing mechanism 23 may be designed as a single-layer compartment door structure including a single layer of panel (i.e., the embodiment shown in FIGS. 4A and 4B), or the opening and closing mechanism 23 may be designed as a multi-layer linkage compartment door structure including multiple layers of panels (i.e., the embodiment shown in FIGS. 4C and 4D). The single-layer compartment door structure is simple in design, which can reduce manufacturing costs, while the design of the multi-layer linkage compartment door structure can reduce the space occupied by the opening and closing mechanism 23 when in an open state.

In addition, a material of the compartment doors 231, 232 in the opening and closing mechanism 23 is not limited in the disclosure, and the compartment doors may be made of a material with sufficient hardness, or may be designed as soft material doors (e.g., retractable doors and roller shutter doors).

In this embodiment, when the opening and closing mechanism 23 opens the opening 221 of the accommodating mechanism 22, the accommodating mechanism 22 may be in communication with the parking mechanism 21 located above the accommodating mechanism. When the opening and closing mechanism 23 closes the opening 221 of the accommodating mechanism 22, the accommodating mechanism 22 is separated from the parking mechanism 21 by means of the opening and closing mechanism 23.

The battery mounting/dismounting mechanism 24 is arranged in the accommodating mechanism 22 and can be lifted or lowered relative to the accommodating mechanism 22.

Optionally, the battery mounting/dismounting mechanism 24 includes a rail guided vehicle.

In this embodiment, when the opening and closing mechanism 23 opens the opening 221 of the accommodating mechanism 22, the battery mounting/dismounting mechanism 24 can be lifted relative to the accommodating mechanism 22 to extend out of the accommodating mechanism 22 through the opening 221, and perform a battery mounting/dismounting operation for the vehicle parked on the parking mechanism 21.

Specifically, the battery mounting/dismounting mechanism 24 can be lifted or lowered relative to the accommodating mechanism 22 to switch between an operating state and a non-operating state. When the opening and closing mechanism 23 opens the opening 221 of the accommodating mechanism 22, the battery mounting/dismounting mechanism 24 can be lifted relative to the accommodating mechanism 22 to switch to the operating state. In this state, at least a part of the battery mounting/dismounting mechanism 24 can extend out of the accommodating mechanism 22 through the opening 221, so as to perform a battery mounting/dismounting operation for the vehicle parked on the parking mechanism 21.

In another embodiment, when the opening and closing mechanism 23 closes the opening 221 of the accommodating mechanism 22, the battery mounting/dismounting mechanism 24 may be in the non-operating state. In this state, the battery mounting/dismounting mechanism 24 is entirely received in the accommodating mechanism 22.

In this embodiment, when the opening and closing mechanism 23 closes the opening 221 of the accommodating mechanism 22, the vehicle is enabled to enter or leave the parking mechanism 21.

In another embodiment, the battery swap platform 2 further includes a vehicle hoisting mechanism 25.

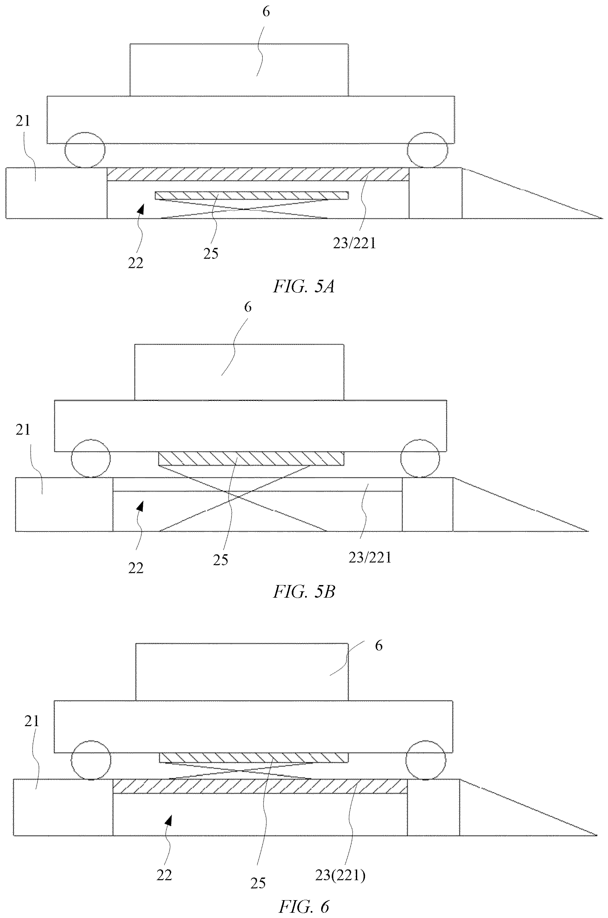

As shown in FIGS. 5A and 5B, in an embodiment, the vehicle hoisting mechanism 25 is arranged in the accommodating mechanism 22 and can be lifted or lowered relative to the accommodating mechanism 22.

As shown in FIG. 5A, when the opening and closing mechanism 23 closes the opening 221 of the accommodating mechanism 22, the vehicle hoisting mechanism 25 is entirely received in the accommodating mechanism 22.

As shown in FIG. 5B, when the opening and closing mechanism 23 opens the opening 221 of the accommodating mechanism 22, the vehicle hoisting mechanism 25 can be lifted relative to the accommodating mechanism 22 to extend out of the accommodating mechanism 22 through the opening 221, and slightly lift the vehicle 6 parked on the parking mechanism 21, to cause the vehicle 6 to be arranged horizontally.

As shown in FIG. 6, in another embodiment, the vehicle hoisting mechanism 25 may also be arranged on the parking mechanism 21, to slightly lift the vehicle 6 parked on the parking mechanism 21, so as to cause the vehicle 6 to be arranged horizontally.

In another embodiment, the vehicle hoisting mechanism 25 may also cause the vehicle to be arranged horizontally by slightly lifting the wheel alignment device 211.

In this embodiment, the vehicle hoisting mechanism 25 may be a scissor lift, a lead screw hoister, a hydraulic jack hoister, etc., and the disclosure is not limited thereto. Other mechanical arrangements that can be used to lift the vehicle are applicable, which will not be limited in the disclosure.

### Second embodiment

The second embodiment of the disclosure provides a battery swap station 3.

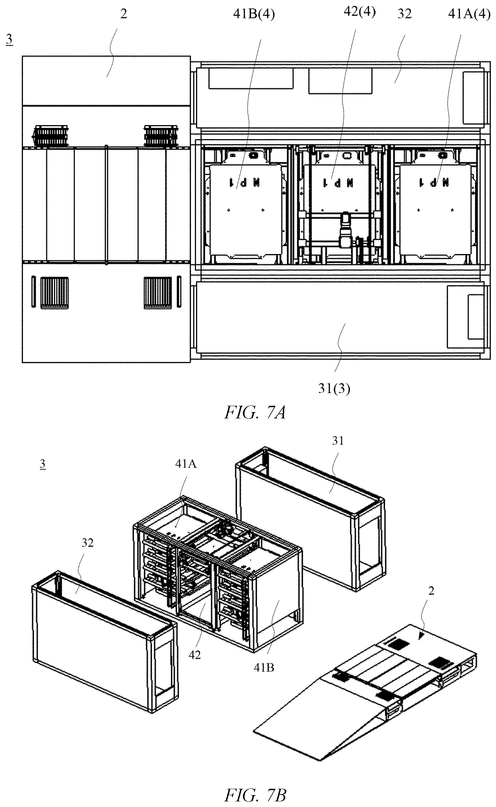

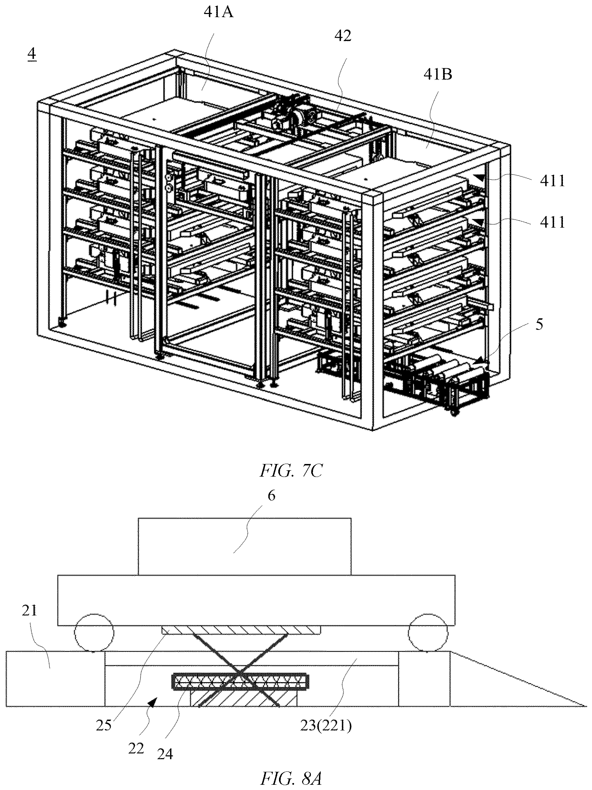

As shown in FIGS. 7A to 7C, the battery swap station 3 according to this embodiment of the disclosure mainly includes the battery swap platform 2 described in the first embodiment, a battery storage mechanism 4, and a battery docking structure 5.

In this embodiment, the battery swap platform 2 is configured to mount or dismount a battery on or from a vehicle 6, the battery storage mechanism 4 is configured to store the battery, and the battery docking mechanism 5 connects the battery swap platform 2 to the battery storage mechanism 4 and is configured to convey the battery between the battery swap platform 2 and the battery storage mechanism 4.

In this embodiment, the battery storage mechanism 4 may include two battery storage racks 41A, 41B and a lifting device 42 arranged between the two battery storage racks 41A, 41B.

Optionally, each of the battery storage racks 41A, 41B includes a plurality of battery compartments 411 arranged in a stacked manner, and the lifting device 42 can be lifted or lowered in a vertical direction of the battery storage racks 41A, 41B so as to be docked with one of the plurality of battery compartments 411.

Optionally, a plurality of battery storage racks 41A, 41B may also be arranged side-by-side on a single side of the lifting device 42, and the lifting device 42 can move in a horizontal direction of the battery storage racks 41A, 41B so as to be docked with one of the plurality of battery storage racks 41A, 41B.

For example, a guide rail may be installed below the lifting device 42, so that the lifting device 42 can move along the guide rail between the plurality of battery storage racks 41A, 41B arranged side-by-side, thereby increasing the capacity of the battery compartment 411.

The battery docking mechanism 5 may be implemented by means of various structural designs. For example, the battery docking mechanism 5 may be a conveying mechanism such as a roller conveying line, a chain conveying line and a belt conveying line, but the disclosure is not limited thereto. The battery docking mechanism 5 may also be presented by means of a guide rail cooperating with a docking vehicle, but the disclosure is not limited thereto.

In another embodiment, the battery swap station 3 may further include charging devices (not shown) which are respectively arranged in the battery compartments 411 and are configured to be electrically connected to batteries stored in the battery compartments 411 for charging.

Referring to FIGS. 7A and 7B, in another embodiment, the battery swap station 3 may be further provided with an electrical room 31 and a control room 32. The electrical room 31 is responsible for charging control and management of each charging device, and the control room 32 is responsible for motion logic control of each component in the entire battery swap station 3.

### Third embodiment

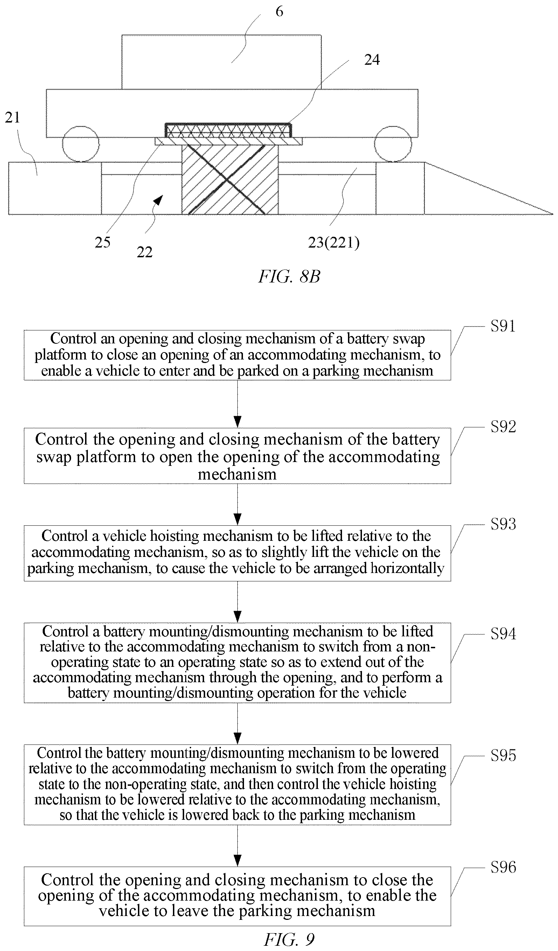

FIG. 9 shows main steps of a battery swap method according to the third embodiment of the disclosure. The battery swap method provided according to the embodiment of the disclosure is applied to the battery swap platform 2 described in the first embodiment, and mainly includes the following steps.

According to the invention, the vehicle hoisting mechanism 25 is arranged in the accommodating mechanism 22 and is taken for description.

In step S91, the opening and closing mechanism 23 of the battery swap platform 2 is controlled to close the opening 221 of the accommodating mechanism 22, to enable the vehicle 6 to enter and be parked on the parking mechanism 21.

In this embodiment, a wheel alignment device 211 may be used to position wheels of the vehicle 6, such that the vehicle 6 is positioned at a designated position of the parking mechanism 21.

In step S92, the opening and closing mechanism 23 of the battery swap platform 11 is controlled to open the opening 221 of the accommodating mechanism 22 after the vehicle 6 is positioned on the parking mechanism 21.

In step S93, the vehicle hoisting mechanism 25 is controlled to be lifted relative to the accommodating mechanism 22, so as to slightly lift the vehicle 6 on the parking mechanism 21, to cause the vehicle 6 to be arranged horizontally (in a state shown in FIG. 8A).

In step S94, the battery mounting/dismounting mechanism 24 is controlled to be lifted relative to the accommodating mechanism 22 to switch from a non-operating state to an operating state so as to extend out of the accommodating mechanism 22 through the opening 221 after the vehicle reaches the arranged horizontally state, and to perform a battery mounting/dismounting operation for the vehicle 6 (in a state shown in FIG. 8B).

In step S95, the battery mounting/dismounting mechanism 24 is first controlled to be lowered relative to the accommodating mechanism 22 to switch from the operating state to the non-operating state after the battery mounting/dismounting operation is completed for the vehicle 6, and then the vehicle hoisting mechanism 25 is controlled to be lowered relative to the accommodating mechanism 22, so that the vehicle 6 is lowered back to the parking mechanism 21.

In step S96, the opening and closing mechanism 23 is controlled to close the opening 221 of the accommodating mechanism 22, to enable the vehicle 6 to leave the parking mechanism 21.

In summary, in the battery swap platform provided in the embodiments of the disclosure, the accommodating mechanism is arranged below the parking mechanism to transfer the battery mounting/dismounting mechanism to below the parking mechanism. When the accommodating mechanism is in the closed state, the vehicle is enabled to enter or leave the parking mechanism. When the vehicle is parked on the parking mechanism, the battery mounting/dismounting mechanism can extend out of the accommodating mechanism by opening the accommodating mechanism, and perform a battery mounting/dismounting operation for the vehicle. In this way, in the disclosure, there is no need to reserve a moving space for the battery mounting/dismounting mechanism on a parking mechanism (the parking platform), so that during the battery mounting/dismounting operation, the vehicle only needs to be slightly lifted, so that the vehicle is in a horizontally arranged state. Therefore, battery swap can be completed without the need for a driver and a passenger to leave the vehicle, which can improve battery swap experience of the vehicle owner. Compared with the prior art in which it is required to substantially lift the vehicle to a preset height, the embodiments of the disclosure can significantly reduce a risk of accidental falling of the vehicle, improve safety of battery swap operation, and reduce the total time taken for vehicle battery swap.

Finally, it should be noted that the foregoing embodiments are merely used for illustrating rather than limiting the technical solutions of the embodiments of the disclosure.

## Claims

1. A battery swap platform (2), comprising:
a parking mechanism (21) configured to park a vehicle (6);
an accommodating mechanism (22), which is arranged below the vehicle (6) parked on the parking mechanism (21), and which has an opening (221);
an opening and closing mechanism (23) arranged on the accommodating mechanism (22) and capable of moving relative to the accommodating mechanism (22) to open or close the opening (221) of the accommodating mechanism (22);
a battery mounting/dismounting mechanism (24) ; and
a vehicle hoisting mechanism (25) configured to slightly lift the vehicle (6) parked on the parking mechanism (21), to cause the vehicle (6) to be arranged horizontally,
wherein when the opening and closing mechanism (23) opens the opening (221) of the accommodating mechanism (22), the battery mounting/dismounting mechanism (24) is capable of being lifted relative to the accommodating mechanism (24) to extend out of the accommodating mechanism (22) through the opening (221), and performing a battery mounting/dismounting operation for the vehicle (6),
wherein both the battery mounting/dismounting mechanism (24) and the vehicle hoisting mechanism (25) are arranged in the accommodating mechanism (22) and configured to be lifted or lowered relative to the accommodating mechanism (22).

2. The battery swap platform (2) according to claim 1, wherein the opening and closing mechanism (23) comprises one of a bidirectional door opening structure and a unilateral door opening structure.

3. The battery swap platform (2) according to claim 1, wherein the opening and closing mechanism (23) comprises one of a single-layer compartment door structure and a multi-layer linkage layered door structure.

4. The battery swap platform (2) according to claim 1, wherein the battery mounting/dismounting mechanism (24) is capable of being lifted or lowered relative to the accommodating mechanism (22) to switch between an operating state and a non-operating state, wherein when the battery mounting/dismounting mechanism (24) is in the operating state, the battery mounting/dismounting mechanism (24) is capable of extending out of the accommodating mechanism (22) through the opening (221), and the battery mounting/dismounting mechanism (24) is configured such that when it is in the non-operating state, the battery mounting/dismounting mechanism (24) is entirely received in the accommodating mechanism (22).

5. The battery swap platform (2) according to claim 4, wherein the opening and closing mechanism (23) is configured such that when it closes the opening (221) of the accommodating mechanism (22), the vehicle (6) is enabled to enter or leave the parking mechanism (21).

6. The battery swap platform (2) according to claim 1, wherein the parking mechanism (21) further comprises:
a wheel alignment device (211) configured to position wheels of the vehicle (6), such that the vehicle (6) is parked on the parking mechanism (21).

7. A battery swap station (3), comprising:
a battery swap platform (2) according to any one of claims 1 to 6 configured to mount or dismount a battery on or from a vehicle (6);
a battery storage mechanism (4) configured to store the battery; and
a battery docking mechanism (5) configured to connect the battery swap platform (2) to the battery storage mechanism (4), and to convey the battery between the battery swap platform (2) and the battery storage mechanism (4).

8. A battery swap method applied to a battery swap platform according to any one of claims 1 to 6, the method comprising:
controlling the opening and closing mechanism to close the opening of the accommodating mechanism, to enable the vehicle to enter the parking mechanism (S91);
controlling the opening and closing mechanism to open the opening of the accommodating mechanism after the vehicle is parked on the parking mechanism (S92);
controlling the vehicle hoisting mechanism to be lifted relative to the accommodating mechanism, so as to slightly lift the vehicle on the parking mechanism, to cause the vehicle to be arranged horizontally (S93);
controlling the battery mounting/dismounting mechanism to switch from a non-operating state to an operating state so as to extend out of the accommodating mechanism through the opening, to perform a battery mounting/dismounting operation for the vehicle (S94);
controlling the battery mounting/dismounting mechanism to switch from the operating state to the non-operating state so as to be completely received in the accommodating mechanism after the battery mounting/dismounting mechanism completes the battery mounting/dismounting operation for the vehicle; and
controlling the opening and closing mechanism to close the opening of the accommodating mechanism, to enable the vehicle to leave the parking mechanism (S96).

## Patentansprüche

1. Batteriewechselplattform (2), Folgendes aufweisend:
einen Parkmechanismus (21) der zum Parken eines Fahrzeugs (6) ausgelegt ist;
einen Aufnahmemechanismus (22), der unter dem auf dem Parkmechanismus (21) geparkten Fahrzeug (6) angeordnet ist und eine Öffnung (221) aufweist;
einen Öffnungs- und Schließmechanismus (23), der an dem Aufnahmemechanismus (22) angeordnet und dazu funktionsfähig ist, sich in Bezug zum Aufnahmemechanismus (22) zu bewegen, um die Öffnung (221) des Aufnahmemechanismus (22) zu öffnen oder zu schließen; einen Batterieeinbau-/-ausbaumechanismus (24) und
einen Fahrzeughebemechanismus (25), der dazu ausgelegt ist, das auf dem Parkmechanismus (21) geparkte Fahrzeug (6) leicht anzuheben, um zu bewirken, dass das Fahrzeug (6) horizontal angeordnet ist,
wobei, wenn der Öffnungs- und Schließmechanismus (23) die Öffnung (221) des Aufnahmemechanismus (22) öffnet, der Batterieeinbau-/-ausbaumechanismus (24) dazu funktionsfähig ist, in Bezug zum Aufnahmemechanismus (24) angehoben zu werden, um sich durch die Öffnung (221) aus dem Aufnahmemechanismus (22) heraus zu erstrecken, und einen Batterieeinbau-/-ausbauvorgang für das Fahrzeug (6) auszuführen,
wobei sowohl der Batterieeinbau-/-ausbaumechanismus (24) als auch der Fahrzeughebemechanismus (25) im Aufnahmemechanismus (22) angeordnet und dazu ausgelegt sind, in Bezug zum Aufnahmemechanismus (22) angehoben oder abgesenkt zu werden.

2. Batteriewechselplattform (2) nach Anspruch 1, wobei der Öffnungs- und Schließmechanismus (23) eine bidirektionale Abdeckungsöffnungsstruktur oder eine unilaterale Abdeckungsöffnungsstruktur aufweist.

3. Batteriewechselplattform (2) nach Anspruch 1, wobei der Öffnungs- und Schließmechanismus (23) eine einlagige Fachabdeckungsstruktur oder eine mehrlagige lagengekoppelte Abdeckungsstruktur aufweist.

4. Batteriewechselplattform (2) nach Anspruch 1, wobei der Batterieeinbau-/-ausbaumechanismus (24) dazu funktionsfähig ist, in Bezug zum Aufnahmemechanismus (22) angehoben oder abgesenkt zu werden, um zwischen einem Betriebszustand und einem Ruhezustand zu wechseln, wobei, wenn sich der Batterieeinbau-/-ausbaumechanismus (24) im Betriebszustand befindet, der Batterieeinbau-/-ausbaumechanismus (24) dazu funktionsfähig ist, sich durch die Öffnung (221) aus dem Aufnahmemechanismus (22) heraus zu erstrecken, und wobei der Batterieeinbau-/-ausbaumechanismus (24) derart ausgelegt ist, dass, wenn er sich im Ruhezustand befindet, der Batterieeinbau-/-ausbaumechanismus (24) vollständig im Aufnahmemechanismus (22) aufgenommen ist.

5. Batteriewechselplattform (2) nach Anspruch 4, wobei der Öffnungs- und Schließmechanismus (23) derart ausgelegt ist, dass, wenn er die Öffnung (221) des Aufnahmemechanismus (22) schließt, das Fahrzeug (6) in den Parkmechanismus (21) einfahren oder ihn verlassen kann.

6. Batteriewechselplattform (2) nach Anspruch 1, wobei der Parkmechanismus (21) ferner Folgendes aufweist:
eine Radausrichtungsvorrichtung (211), die dazu ausgelegt ist, die Räder des Fahrzeugs (6) so zu positionieren, dass das Fahrzeug (6) auf dem Parkmechanismus (21) geparkt ist.

7. Batteriewechselstation (3), Folgendes aufweisend:
eine Batteriewechselplattform (2) nach einem der Ansprüche 1 bis 6, die dazu ausgelegt ist, eine Batterie in ein Fahrzeug (6) einzubauen oder daraus auszubauen;
einen Batterielagermechanismus (4), der dazu ausgelegt ist, die Batterie zu lagern; und
einen Batteriedockingmechanismus (5), der dazu ausgelegt ist, die Batteriewechselplattform (2) mit dem Batterielagermechanismus (4) zu verbinden und die Batterie zwischen der Batteriewechselplattform (2) und dem Batterielagermechanismus (4) zu befördern.

8. Batteriewechselverfahren, das auf eine Batteriewechselplattform nach einem der Ansprüche 1 bis 6 angewendet wird, wobei das Verfahren Folgendes aufweist:
Steuern des Öffnungs- und Schließmechanismus, um die Öffnung des Aufnahmemechanismus zu schließen, damit das Fahrzeug in den Parkmechanismus einfahren kann (S91);
Steuern des Öffnungs- und Schließmechanismus, um die Öffnung des Aufnahmemechanismus zu öffnen, nachdem das Fahrzeug auf dem Parkmechanismus geparkt ist (S92);
Steuern des Fahrzeughebemechanismus, in Bezug zum Aufnahmemechanismus angehoben zu werden, um das Fahrzeug auf dem Parkmechanismus leicht anzuheben, um zu bewirken, dass das Fahrzeug horizontal angeordnet ist (S93);
Steuern des Batterieeinbau-/-ausbaumechanismus, um von einem Ruhezustand in einen Betriebszustand zu wechseln, um sich durch die Öffnung aus dem Aufnahmemechanismus heraus zu erstrecken, um einen Batterieeinbau-/-ausbauvorgang für das Fahrzeug auszuführen (S94);
Steuern des Batterieeinbau-/-ausbaumechanismus, um vom Betriebszustand in dem Ruhezustand zu wechseln, um vollständig im Aufnahmemechanismus aufgenommen zu sein, nachdem der Batterieeinbau-/-ausbaumechanismus den Batterieeinbau-/-ausbauvorgang für das Fahrzeug abgeschlossen hat; und
Steuern des Öffnungs- und Schließmechanismus, um die Öffnung des Aufnahmemechanismus zu schließen, damit das Fahrzeug den Parkmechanismus verlassen kann (S96).

## Revendications

1. Plate-forme de permutation de batteries (2), comprenant :
un mécanisme de stationnement (21) conçu pour garer un véhicule (6) ;
un mécanisme de réception (22), qui est disposé sous le véhicule (6) garé sur le mécanisme de stationnement (21), et qui comporte une ouverture (221) ;
un mécanisme d'ouverture et de fermeture (23) disposé sur le mécanisme de réception (22) et pouvant se déplacer par rapport au mécanisme de réception (22) pour ouvrir ou fermer l'ouverture (221) du mécanisme de réception (22) ;
un mécanisme de montage/démontage de batterie (24) ; et
un mécanisme de levage de véhicule (25) conçu pour lever légèrement le véhicule (6) garé sur le mécanisme de stationnement (21), afin que le véhicule (6) soit disposé horizontalement,
lorsque le mécanisme d'ouverture et de fermeture (23) ouvre l'ouverture (221) du mécanisme de réception (22), le mécanisme de montage/démontage de batterie (24) pouvant être levé par rapport au mécanisme de réception (24) pour sortir du mécanisme de réception (22) par l'ouverture (221), et effectuer une opération de montage/démontage de batterie pour le véhicule (6),
le mécanisme de montage/démontage de batterie (24) et le mécanisme de levage du véhicule (25) étant tous deux disposés dans le mécanisme de réception (22) et conçus pour être levés ou abaissés par rapport au mécanisme de réception (22).

2. Plate-forme de permutation de batteries (2) selon la revendication 1, le mécanisme d'ouverture et de fermeture (23) comprenant l'une parmi une structure d'ouverture de porte bidirectionnelle et une structure d'ouverture de porte unilatérale.

3. Plate-forme de permutation de batteries (2) selon la revendication 1, le mécanisme d'ouverture et de fermeture (23) comprenant l'une parmi une structure de porte de compartiment à couche unique et une structure de porte à multiples couches couplées.

4. Plate-forme de permutation de batteries (2) selon la revendication 1, le mécanisme de montage/démontage de batteries (24) pouvant être levé ou abaissé par rapport au mécanisme de réception (22) pour commuter entre un état fonctionnel et un état non fonctionnel, lorsque le mécanisme de montage/démontage de batteries (24) est dans l'état fonctionnel, le mécanisme de montage/démontage de batterie (24) pouvant s'étendre hors du mécanisme de réception (22) par l'ouverture (221), et le mécanisme de montage/démontage de batterie (24) étant conçu de sorte que lorsqu'il est à l'état non fonctionnel, le mécanisme de montage/démontage de batterie (24) soit entièrement reçu dans le mécanisme de réception (22).

5. Plate-forme de permutation de batteries (2) selon la revendication 4, le mécanisme d'ouverture et de fermeture (23) étant conçu de sorte que lorsqu'il ferme l'ouverture (221) du mécanisme de réception (22), le véhicule (6) puisse entrer dans le mécanisme de stationnement (21) ou en sortir.

6. Plate-forme de permutation de batteries (2) selon la revendication 1, le mécanisme de stationnement (21) comprenant en outre :
un dispositif d'alignement des roues (211) conçu pour positionner les roues du véhicule (6), de sorte que le véhicule (6) soit garé sur le mécanisme de stationnement (21).

7. Plate-forme de permutation de batteries (3), comprenant :
une plate-forme de permutation de batteries (2) selon l'une quelconque des revendications 1 à 6, conçue pour monter ou démonter une batterie sur ou d'un véhicule (6) ;
un mécanisme de stockage de batterie (4) conçu pour stocker la batterie ; et
un mécanisme d'accueil de batterie (5) conçu pour connecter la plate-forme de permutation de batteries (2) au mécanisme de stockage de batterie (4) et pour transporter la batterie entre la plate-forme de permutation de batteries (2) et le mécanisme de stockage de batterie (4).

8. Procédé de permutation de batteries appliqué à une plate-forme de permutation de batteries selon l'une quelconque des revendications 1 à 6, le procédé comprenant :
commander le mécanisme d'ouverture et de fermeture pour fermer l'ouverture du mécanisme de réception, afin de permettre au véhicule d'entrer dans le mécanisme de stationnement (S91) ;
commander le mécanisme d'ouverture et de fermeture pour ouvrir l'ouverture du mécanisme de réception après que le véhicule a été garé sur le mécanisme de stationnement (S92) ;
commander le mécanisme de levage du véhicule pour qu'il soit levé par rapport au mécanisme de réception, de sorte à lever légèrement le véhicule sur le mécanisme de stationnement, pour amener le véhicule à être disposé horizontalement (S93) ;
commander le mécanisme de montage/démontage de batterie pour qu'il passe d'un état non fonctionnel à un état fonctionnel de sorte à s'étendre hors du mécanisme de réception par l'ouverture, afin d'effectuer une opération de montage/démontage de batterie pour le véhicule (S94) ;
commander le mécanisme de montage/démontage de batterie pour qu'il passe de l'état fonctionnel à l'état non fonctionnel de sorte à être complètement reçu dans le mécanisme de réception après que le mécanisme de montage/démontage de batterie a terminé l'opération de montage/démontage de batterie pour le véhicule ; et
commander le mécanisme d'ouverture et de fermeture pour fermer l'ouverture du mécanisme de réception, afin de permettre au véhicule de quitter le mécanisme de stationnement (S96).
